# EUROPÄISCHE PATENTSCHRIFT

(11) **EP 2 691 179 B1**
(45) Veröffentlichungstag und Bekanntmachung des Hinweises auf die Patenterteilung: **17.06.2015**
(21) Anmeldenummer: 12716286.5
(22) Anmeldetag: 29.03.2012
(51) Int. Cl.: B01L 3/02, G01F 23/296

(54) **ZUSTANDSÜBERWACHUNG EINER PIPETTENSPITZE MIT VON INNEN ANGEKOPPELTEN PIEZOELEKTRISCHEN ELEMENTEN**
CONDITION MONITORING OF A PIPETTE TIP VIA A PIEZOELECTRIC ELEMENT COUPLED TO THE INSIDE THEREOF
SURVEILLANCE DE L'ÉTAT D'UN EMBOUT DE PIPETTE PAR L'INTERMÉDIAIRE D'UN ÉLÉMENT PIÉZO-ÉLECTRIQUE COUPLÉ À L'INTÉRIEUR DE CELUI-CI

(30) Priorität: 31.03.2011 DE 102011006581
(43) Veröffentlichungstag der Anmeldung: 05.02.2014
(73) Patentinhaber: Hamilton Bonaduz AG, 7402 Bonaduz (CH)
(72) Erfinder: KIRSTE, Vinzenz, CH-7402 Bonaduz (CH); KRAMM, Joel, CH-7000 Chur (CH); MÜLLER, Jonas, CH-8808 Pfäffikon (CH)
(74) Vertreter: RLTG
(86) Internationale Anmeldenummer: PCT/EP2012/055744
(87) Internationale Veröffentlichungsnummer: WO 2012/131013

(56) Entgegenhaltungen:
- WO-A1-00/62933
- DE-A1-102007 019 186

## Beschreibung

Die vorliegende Erfindung betrifft eine Pipettiervorrichtung mit wenigstens einem Pipettierkanal, welcher einen Kopplungsstutzen aufweist, der dazu ausgebildet ist, zur betriebsmäßigen Ankopplung einer Pipettenspitze an den Pipettierkanal längs einer Einführachse in einer Einführrichtung in einen den Kopplungsstutzen im gekoppelten Zustand außen umgebenden Kopplungshülsenbereich der Pipettenspitze eingeführt zu werden.

Derartige Pipettiervorrichtungen sind im Stand der Technik allgemein bekannt. Eine gattungsgemäße Pipettiervorrichtung ist beispielsweise aus der WO 00/62933 A bekannt.

Eine gattungsgemäße Pipettiervorrichtung ist auch aus der DE 10 2007 019 186 A1 bekannt. Diese offenbart eine Pipettiervorrichtung mit einer Messeinrichtung, welche wenigstens das Gewicht einer an der Pipettiervorrichtung angebrachten Pipettierspitze nebst Inhalt zu messen vermag. Die genannte Druckschrift nennt ganz allgemein die Möglichkeit, das Gewicht der Pipettierspitze mit Inhalt durch Schwingungsanregung zu ermitteln, ohne hierfür Maßnahmen anzugeben, wie dies im Einzelnen erreicht werden soll. Die aus der DE 10 2007 019 186 A1 bekannte Messeinrichtung ist an der dort gezeigten Pipettiervorrichtung axial außerhalb der Kopplungsstelle der Pipettiervorrichtung mit einer Pipettierspitze angeordnet.

Weiterhin ist es beispielsweise aus der WO 2009/103392 A bekannt, an das einen Pipettierkanal umschließende Saugrohr radial außen einen Piezoaktuator, gegebenenfalls mit Zusatzmasse, anzubringen, um das Saugrohr mit der daran festgelegten Pipettenspitze gezielt in Schwingungen versetzen zu können und Schwingungen des Systems aus Saugrohr und Pipettenspitze erfassen zu können.

Ebenso ist es aus der EP 1 596 169 A bekannt, eine Pipettiernadel im Bereich eines Pipettiernadelhalters einer Pipettiervorrichtung radial außen mit einem elektromechanischen Wandler ("transducer") zu versehen, um ebenfalls die Pipettiernadel gezielt in Schwingungen versetzen zu können und Schwingungen der Pipettiernadel erfassen zu können.

Das Vorsehen einer Möglichkeit der Schwingungsanregung sowie der Schwingungserfassung ist an Pipettenspitzen von Vorteil, da ausgehend von einem erfassten Schwingungsverhalten einer Pipettenspitze oder eines damit unmittelbar verbundenen Teils der Pipettiervorrichtung nach gezielter Schwingungsanregung Rückschlüsse auf die Eintauchtiefe der Pipettenspitze in Dosierflüssigkeit oder auf den Füllgrad der Pipettenspitze mit Dosierflüssigkeit gezogen werden können.

Nachteilig an den aus dem Stand der Technik bekannten Schwingungsanregungseinrichtungen und Schwingungssensoren an Pipettiervorrichtungen ist ihre raumgreifende Anordnung an der Pipettiervorrichtung.

Alle in den obengenannten Druckschriften offenbarten Schwingungsanregungseinrichtungen und Schwingungssensoren sind radial außen entweder am Saugrohr oder an der Kopplungsstelle zwischen Pipettennadel und Pipettennadelhalter vorgesehen.

Im Falle der WO 2009/103392 A führt die Anordnung der Schwingungsanregungseinrichtung und des Schwingungssensors am Saugrohr zu einem unerwünscht großen Abstand zwischen der Einleitungs- bzw. Erfassungsstelle von Schwingungen in den Pipettierkanal und der eigentlich schwingungsmäßig interessierenden Pipettenspitze.

Zwar sind die aus der EP 1 596 169 A bekannten Schwingungsanregungseinrichtung und Schwingungssensor näher an der schwingungsmäßig interessierenden Pipettiernadel angeordnet, jedoch sind diese in den mechanischen Verstellaktuator zur Lageverstellung der Pipettiernadel integriert, welcher selbst wiederum Pipettiernadel und Pipettiernadelhalter trägt. Dies ist nachteilig, da eine Pipettiervorrichtung häufig über mehrere parallele Pipettierkanäle verfügt, die rasterartig angeordnet sind.

Die aus dem Stand der Technik bekannten Anordnungen der Schwingungsanregungseinrichtungen und Schwingungssensoren an den Pipettierkanälen gestatten die Ausbildungen von Pipettierköpfen mit mehreren Pipettierkanälen nur unter unerwünscht großem Abstand zwischen den einzelnen benachbarten Pipettierkanälen, da in diesem Abstand der Bauraum für die Anbringung der Schwingungsanregungseinrichtungen und Schwingungssensoren bereitgestellt werden muss.

Es ist daher Aufgabe der vorliegenden Erfindung, eine gattungsgemäße Pipettiervorrichtung derart weiterzubilden, dass eine an die Pipettiervorrichtung angekoppelte Pipettenspitze zu Schwingungen angeregt werden kann, ihre Schwingung erfasst werden kann und der Pipettierkanal dennoch nicht mehr Bauraum einnimmt als der aus dem Stand der Technik bereits bekannte Pipettierkanal ohne entsprechende technische Vorkehrungen zur Schwingungsanregung und -erfassung, so dass Pipettierköpfe mit mehreren Pipettierkanälen unabhängig vom Vorsehen einer Schwingungsanregungseinrichtung oder eines Schwingungssensors stets mit gleichem Rastermaß an Pipettierkanälen bereitgestellt werden können.

Diese Aufgabe wird erfindungsgemäß durch eine Pipettiervorrichtung der eingangs genannten Art, wie sie aus der WO 00/62933 A bekannt ist, mit allen Merkmalen des Anspruchs 1 gelöst. Erfindungsgemäß weist der Kopplungsstutzen in einem Bereich, welcher bei angekoppelter Pipettenspitze radial innerhalb der Pipettenspitze gelegen ist, wenigstens eine Schwingungsanregungseinrichtung auf, welche dazu ausgebildet ist, eine Schwingungsform an einem mit ihr in Anlageeingriff stehenden Bauteil oder Bauteilabschnitt anzuregen, und weist der Kopplungsstutzen in einem Bereich, welcher bei angekoppelter Pipettenspitze radial innerhalb der Pipettenspitze gelegen ist, wenigstens einen Schwingungssensor auf, welcher dazu ausgebildet ist, eine Schwingungsform eines mit ihm in Anlageeingriff stehenden Bauteils oder Bauteilabschnitts zu erfassen.

Mit der hier vorgeschlagenen vorteilhaften Bauweise sind die Schwingungsanregungseinrichtung und der Schwingungssensor vorteilhafterweise in einem System aus Pipettiervorrichtung und daran angekoppelter Pipettenspitze radial innerhalb der Pipettenspitze vorgesehen, so dass die erfindungsgemäße Anordnung der Schwingungsanregungseinrichtung und des Schwingungssensors das radiale Baumaß des Pipettierkanals und der Pipettenspitze nicht verändern. Somit können Pipettierkanäle auch dann, wenn sie mit entsprechenden Schwingungsanregungseinrichtungen und Schwingungssensoren versehen sind, mit demselben Rastermaß in einer Pipettiervortung mit Mehrfach-Pipettierkopf angeordnet werden, wie wenn die Einrichtungen mit schwingungstechnischem Bezug, also Schwingungsanregungseinrichtung und Schwingungssensor, nicht vorhanden wären. Dies hat den Vorteil, dass mit derart ausgerüsteten Pipettiervorrichtungen aus denselben Mikrotiterplatten bzw. in dieselben Mikrotiterplatten pipettiert werden kann, die bisher zum Pipettieren verwendet wurden. Somit ist unabhängig von der Ausrüstung eines oder mehrerer Pipettierkanäle einer Pipettiervorrichtung mit einer Schwingungsanregungseinrichtung und einem Schwingungssensor keine weitere Anpassung von mit der Pipettiervorrichtung zusammenwirkenden Laborgeräten notwendig. Auch eine Anpassung der Pipettenspitzen an die schwingungsbezogene Ausrüstung des Kopplungsstutzens der Pipettiervorrichtung ist nicht unbedingt notwendig, wenngleich eine Änderung der Geometrie der Pipettenspitze, etwa im Kopplungshülsenbereich, die schwingungsmechanische Ankopplung der Schwingungsanregungseinrichtung oder/und des Schwingungssensors an die Pipettenspitze verbessern kann.

Durch die Anordnung der Schwingungsanregungseinrichtung und des Schwingungssensors am Kopplungsstutzen ist stets sichergestellt, dass die Schwingungsanregungseinrichtung Schwingungen in die an den Kopplungsstutzen angekoppelte Pipettenspitze möglichst unmittelbar einleiten kann und dass der Schwingungssensor Schwingungen der Pipettenspitze erfassen kann, da der Kopplungsstutzen bei angekoppelter Pipettenspitze stets vom Kopplungshülsenbereich derselben umgeben ist, was die mechanische Ankoppelbarkeit der Schwingungsanregungseinrichtung und des Schwingungssensors an die Pipettenspitze gewährleistet.

Dabei kann in vorteilhafter Weise die Anzahl an Bauteilen, welche zur Realisierung einer erfindungsgemäßen Pipettiervorrichtung benötigt werden, gering gehalten werden, wenn wenigstens ein Schwingungssensor auch eine Schwingungsanregungseinrichtung und umgekehrt ist. Somit kann ein und dasselbe Bauteil sowohl zur Schwingungsanregung als auch zur Schwingungserfassung verwendet werden. Bevorzugt ist der wenigstens eine Schwingungssensor auch die wenigstens eine Schwingungsanregungseinrichtung, so dass also alle an dem Kopplungsstutzen vorgesehenen Schwingungssensoren auch jeweils eine Schwingungsanregungseinrichtung sind. In diesem Falle können die Vorteile der erfindungsgemäßen Pipettiervorrichtung mit der geringstmöglichen Anzahl an Bauteilen mit schwingungstechnischem Bezug erreicht werden.

Die Gewährleistung eines Anlageeingriffs zwischen der Schwingungsanregungseinrichtung oder/und dem Schwingungssensor mit einem Bauteil, etwa der Pipettenspitze, oder einem Bauteilabschnitt, etwa dem Kopplungshülsenbereich derselben, kann dadurch in vorteilhafter Weise gefördert werden, dass die wenigstens eine Schwingungsanregungseinrichtung oder/und der wenigstens eine Schwingungssensor jeweils mit einer freiliegenden, bezogen auf die Einführachse nach radial außen weisenden Radialkontaktfläche am Kopplungsstutzen vorgesehen ist. Somit kann die freiliegende Radialkontaktfläche am Kopplungsstutzen mit einer Radialgegenkontaktfläche am Bauteil bzw. Bauteilabschnitt in Anlageeingriff kommen. Durch das Freiliegen der Radialkontaktfläche ist ein unmittelbarer Kontakt der Schwingungsanregungseinrichtung oder/und des Schwingungssensors mit dem jeweils schwingungsmäßig angekoppelten Bauteil oder Bauteilabschnitt ohne Dämpfung durch zwischenangeordnete weitere Bauteile möglich, was eine möglichst verlustarme Schwingungsanregung des Bauteils bzw. Bauteilabschnitts und eine möglichst exakte Erfassung der Schwingungsform des Bauteils bzw. Bauteilabschnitts ermöglicht.

Je nachdem, welche Schwingungsmode der Pipettenspitze angeregt oder erfasst werden soll, können unterschiedliche Relativstellungen der Schwingungsanregungseinrichtung oder/und des Schwingungssensors relativ zu dem mit ihm in Anlageeingriff stehenden oder bringbaren Bauteil oder Bauteilabschnitt vorteilhaft sein. Eine mögliche Relativstellung wird durch die oben genannte freiliegende Radialkontaktfläche begründet. Für andere Schwingungsmoden kann es dagegen vorteilhaft sein, wenn die wenigstens eine Schwingungsanregungseinrichtung oder/und der wenigstens eine Schwingungssensor jeweils mit einer freiliegenden, in Einführrichtung weisenden Axialkontaktfläche am Kopplungsstutzen vorgesehen ist.

Vorteilhafterweise kann der Kopplungsstutzen eine in axiale Richtung weisende Axialanschlagfläche aufweisen, welche im Anlageeingriff mit einer Axialgegenanschlagfläche für eine definierte Axialposition der Pipettenspitze relativ zum Kopplungsstutzen sorgt. Damit kann ein definierter Kopplungszustand der Pipettenspitze am Kopplungsstutzen erreicht oder zumindest gefördert werden. Vorteilhafterweise ist die freiliegende Axialkontaktfläche des Kopplungsstutzens wenigstens Teil der Axialanschlagfläche, da diese beim Ankoppeln einer Pipettenspitze an den Kopplungsstutzen stets sicher in Anlageeingriff mit der Pipettenspitze gelangt.

Weiter kann auch daran gedacht sein, dass ein und dieselbe Schwingungsanregungseinrichtung bzw. ein und derselbe Schwingungssensor sowohl eine Axialkontaktfläche als auch eine Radialkontaktfläche aufweist, etwa wenn die Schwingungsanregungseinrichtung oder/und der Schwingungssensor eine freiliegende Fläche aufweist, welche zwei einen Winkel zwischen sich einschließende Teilflächen aufweist, so dass eine erste Teilfläche die Axialkontaktfläche bildet und die zweite Teilfläche die Radialkontaktfläche bildet. In diesem Fall kann die Schwingungsanregungseinrichtung oder/und der Schwingungssensor sowohl Teil der Axialanschlagfläche des Kopplungsstutzens als auch Teil einer radialen Mantelfläche desselben sein, wobei vorteilhafterweise die Axialanschlagfläche und die radiale Mantelfläche unmittelbar aneinander angrenzen.

Weiter kann daran gedacht sein, dass die wenigstens eine Schwingungsanregungseinrichtung oder/und der wenigstens eine Schwingungssensor jeweils mit einer freiliegenden, sich in Einführrichtung verjüngenden Konuskontaktfläche am Kopplungsstutzen vorgesehen ist. Dabei soll "Konuskontaktfläche" keinesfalls beschränkend im Sinne eines streng mathematischen Kegels mit geradlinigen Konuskontaktflächenkonturen im Falle eines Längsschnitts in einer die Einführachse enthaltenden Schnittebene verstanden werden. Vielmehr sollte jegliche sich in Einführrichtung verjüngende Kontaktfläche als Konuskontaktfläche im Sinne der vorliegenden Anmeldung verstanden werden, also auch solche Konuskontaktflächen, welche zumindest abschnittsweise in Einführrichtung eine konvexe oder/und konkave Krümmung aufweisen.

Auch eine derartige Konuskontaktfläche kann aufgrund ihrer Lage und Orientierung einfach und sicher an eine entsprechende Konusgegenkontaktfläche der Pipettenspitze in Anlageeingriff gebracht werden. Je nach gewähltem Konuswinkel der Konuskontaktfläche kann diese ohne weitere Hilfsmittel die Pipettenspitze in Klemmeingriff am Kopplungsstutzen halten.

Zur Erhöhung der Kopplungssicherheit zwischen Kopplungsstutzen und Pipettenspitze kann vorteilhafterweise - wie schon aus der WO 00/62933 A bekannt ist - vorgesehen sein, dass der Kopplungsstutzen zwischen einer Kopplungsstellung und einer Freigabestellung verstellbar ist. Dabei ist vorzugsweise die Kopplungsstellung derart zur betriebsmäßigen Ankopplung der Pipettenspitze an den Pipettierkanal ausgebildet, dass dann, wenn man die Pipettiervorrichtung in einem Zustand betrachtet, in welchem der Kopplungsstutzen in den Kopplungshülsenbereich einer Pipettenspitze eingeführt ist, die von dem Kopplungsstutzen auf den ihn radial außen umgebenden Kopplungshülsenbereich ausgeübte Haltekraft in der Kopplungsstellung größer ist als in der Freigabestellung.

Wie in der gesamten vorliegenden Anmeldung, so beziehen sich auch hier Angaben wie "radial" und "axial" auf die Einführachse.

Um die gerade genannte Verstellbarkeit des Kopplungsstutzens zwischen seiner Kopplungsstellung und seiner Freigabestellung bereitstellen zu können, kann der Kopplungsstutzen die nachfolgend genannten Bauteile oder/und Baugruppen umfassen, wobei nicht ausgeschlossen sein soll, dass der Kopplungsstutzen über die genannten Bauteile oder/und Baugruppen hinaus weitere Bauteile und Baugruppen aufweist:
Vorteilhafterweise weist der Kopplungsstutzen eine Einführanordnung auf, von welcher ein Längsabschnitt zur Einführung in die Pipettenspitze ausgebildet ist. Eine derartige Einführanordnung kann beispielsweise der Zentrierung der Pipettenspitze relativ zum Pipettierkanal dienen. Darüber hinaus kann die Einführanordnung die oben genannte Axialanschlagfläche aufweisen, so dass die Einführanordnung auch eine definierte Axialposition der Pipettenspitze relativ zum Kopplungsstutzen sicherstellen kann. Auch kann die Einführanordnung zur fluiddichten Ankopplung der Pipettenspitze an den Kopplungsstutzen beitragen.

Weiter kann der Kopplungsstutzen vorteilhafterweise ein Verformungselement aufweisen, welches in der Kopplungsstellung stärker verformt ist als in der Freigabestellung. Durch dieses Verformungselement kann die oben genannte größere Haltekraft in der Kopplungsstellung bereitgestellt werden, etwa dann, wenn das Verformungselement in der Kopplungsstellung stärker gegen die Pipettenspitze - insbesondere gegen ihren Kopplungshülsenbereich - verformt ist als in der Freigabestellung, so dass aufgrund einer aus der elastischen Verformung resultierenden Kraftwirkung zwischen Verformungselement und Pipettenspitze ein sicherer Halt der Pipettenspitze am Kopplungsstutzen erreicht werden kann. Vorteilhafterweise ist das Verformungselement ein Elastomerring, besonders bevorzugt ein O-Ring, da ein solches Element nicht nur elastisch, also im Wesentlichen reversibel, verformbar ist, sondern darüber hinaus aufgrund seiner Materialbeschaffenheit im Anlageeingriff an der Pipettenspitze, insbesondere an ihrem Kopplungshülsenbereich, einen hohen Reibkoeffizienten aufweist, so dass die aus der elastischen Verformung resultierenden Anlagekräfte des Verformungselements an der Pipettenspitze zu besonders hohen, die Pipettenspitze am Kopplungsstutzen haltenden Reibkräften führen.

Weiter kann der Kopplungsstutzen vorteilhafterweise ein Quetschteil aufweisen, welches eine Verformung des Verformungselements bewirken kann. Hierzu ist das Quetschteil vorteilhafterweise relativ zur Einführanordnung beweglich zwischen einer Quetschstellung und einer Entlastungsstellung. In der Quetschstellung des Quetschteils, welche der Kopplungsstellung des Kopplungsstutzens zugeordnet ist, ist das Verformungselement stärker verformt als dann, wenn sich das Quetschteil in der Entlastungsstellung befindet, welche der Freigabestellung des Kopplungsstutzens zugeordnet ist.

Zuordnung bedeutet hier, dass sich der Kopplungsstutzen dann, wenn sich das Quetschteil in der Quetschstellung befindet, zumindest näher in der Kopplungsstellung befindet als in der Freigabestellung, vorzugsweise vollständig in der Kopplungsstellung befindet. Für die Zuordnung der Entlastungsstellung zur Freigabestellung gilt Entsprechendes.

Um die Beweglichkeit des Quetschteils und die Verformbarkeit der Verformungselements nicht unnötig zu beeinträchtigen, sind die wenigstens eine Schwingungsanregungseinrichtung und der wenigstens eine Schwingungssensor vorteilhafterweise an der Einführanordnung vorgesehen, deren Zentrierungs- oder/und Positionierungs- oder/und Dichtungswirkung durch das Vorsehen von Schwingungsanregungseinrichtung und Schwingungssensor im Wesentlichen nicht gestört wird.

Zur Erzielung eines möglichst definierten Anlageeingriffs zwischen der wenigstens einen Schwingungsanregungseinrichtung oder/und dem wenigstens einen Schwingungssensor einerseits und der Pipettenspitze bzw. deren Kopplungshülsenbereich andererseits kann die wenigstens eine Schwingungsanregungseinrichtung oder/und der wenigstens eine Schwingungssensor relativ zum übrigen Kopplungsstutzen beweglich vorgesehen sein.

Beispielsweise kann die wenigstens eine Schwingungsanregungseinrichtung oder/und der wenigstens eine Schwingungssensor an einem bezogen auf die Einführachse in radialer oder/und axialer Richtung verlagerbaren Träger vorgesehen sein. Mit einer derartigen Konstruktion lassen sich insbesondere die genannten Bauteile mit schwingungstechnischem Bezug in definierten Anlageeingriff bringen, welche die oben genannte Radialkontaktfläche aufweisen.

Hierzu kann der Träger vorteilhafterweise durch Bewegung eines beweglichen Bauteils des Kopplungsstutzens zur radialen oder/und axialen Verlagerung antreibbar sein. Da der Anlageeingriff zwischen dem Bauteil mit schwingungstechnischem Bezug, also der Schwingungsanregungseinrichtung oder/und dem Schwingungssensor, und der Pipettenspitze vor allen Dingen dann relevant ist, wenn sich der Kopplungsstutzen in der Kopplungsstellung befindet, ist vorteilhafterweise daran gedacht, eine Bewegung eines Bestandteils des Kopplungsstutzens zum Antrieb des das Bauteil mit schwingungstechnischem Bezug tragenden Trägers heranzuziehen, welches durch seine Eigenbewegung eine Verstellung des Kopplungsstutzens von der Freigabestellung in die Kopplungsstellung und umgekehrt bewirkt oder zumindest zu dieser beiträgt. Vorteilhafterweise kann dieses Bauteil das oben genannte Quetschteil sein, dessen Bewegung zwischen Quetschstellung und Entlastungsstellung zur radialen oder/und axialen Verlagerung des Trägers verwendet werden kann.

Da in der Regel die Bewegung des oben genannten Bestandteils des Kopplungsstutzens, insbesondere des Quetschteils, nicht oder nicht nur in radialer Richtung erfolgt, ist zur radialen Verlagerung des Trägers durch Bewegung des Bestandteils des Kopplungsstutzens häufig eine Umlenkeinrichtung hilfreich, welche wenigstens einen Teil der Bewegung des Bestandteils des Kopplungsstutzens, insbesondere des Quetschteils, in eine radiale Verlagerung des Trägers umsetzt.

Hierzu kann beispielsweise konkret vorgesehen sein, dass zwischen Quetschteil und Träger eine die Bewegung des Quetschteils in eine radiale Verlagerung des Trägers umlenkende Umlenkeinrichtung vorgesehen ist, welche ein erstes Umlenkbauteil mit einer Wirkfläche aus konischer Wirkfläche und negativ-konischer Gegenwirkfläche aufweist und ein zweites Umlenkbauteil mit der jeweils anderen Wirkfläche aus schräger, insbesondere konischer Wirkfläche und negativ-schräger, insbesondere negativ-konischer Gegenwirkfläche, wobei die schräge, insbesondere konische Wirkfläche und negativ-schräge, insbesondere negativ-konische Gegenwirkfläche zur Bewegungsumlenkung in Gleitanlageeingriff miteinander stehen, und wobei bevorzugt der Träger das zweite Umlenkbauteil ist.

Durch diese sehr einfache Konstruktion kann mit geringen Kosten und hoher Zuverlässigkeit die gewünschte Umlenkung der Quetschteilbewegung in eine radiale Trägerbewegung erreicht werden. Dabei kann es ausreichen, wenn das Quetschteil über die Umlenkeinrichtung den Träger in eine radiale Richtung antreibt und der Träger in die entgegengesetzte Richtung aufgrund von Rückstellkräften, etwa aus seiner eigenen Materialelastizität, zurückgestellt wird. In diesem Fall erfolgt der Antrieb des Trägers in radialer Richtung durch die Quetschteilbewegung gegen eine elastische Vorspannkraft des Trägers oder eines mit dem Träger verbundenen Bauteils.

Bauraum wird allerdings nicht nur von der wenigstens einen Schwingungsanregungseinrichtung und dem wenigstens einen Schwingungssensor unmittelbar beansprucht, sondern auch von den Leitungsverbindungen, welche dazu dienen, die oben genannten Bauteile mit schwingungstechnischem Bezug mit Energie zu versorgen oder/und Signale zu diesen oder/und von diesen zu übertragen. Dabei kann die Pipettiervorrichtung, verglichen mit einer Realisierung ohne Bauteile mit schwingungstechnischem Bezug, ohne zusätzliche Bauraumbeanspruchung verwirklicht werden, wenn der Pipettierkanal ein sich längs einer Pipettierkanalachse erstreckendes zentrales Kanalrohr und wenigstens ein dieses radial außen umgebendes weiteres Bauteil aufweist, wie etwa Verformungselement oder/und Quetschteil, wobei eine Signal oder/und Energie übertragende Leitungsverbindung zu der wenigstens einen Schwingungsanregungseinrichtung oder/und zu dem wenigstens einen Schwingungssensor längs der Pipettierkanalachse radial außerhalb des Kanalrohrs, aber radial innerhalb des weiteren Bauteils geführt ist.

Die Leitungsverbindung kann grundsätzlich durch einen herkömmlichen Draht realisiert sein. Besonders bevorzugt ist die Leitungsverbindung jedoch durch eine Leiterplatine gebildet, da diese bei gleicher Übertragungsleistung wesentlich dünner ausgebildet werden kann, als ein entsprechender Draht. Besonders bevorzugt wird eine Leitungsplatine mit gedruckten Leiterbahnen und flexiblem Substrat verwendet, so dass die Platine im Verlauf der Leitungsverbindung Richtungsänderungen ausführen kann.

Durch die beschriebene Anordnung der Leitungsverbindung wird das im zentralen Kanalrohr befindliche Fluid durch die Leitungsverbindung nicht gestört, so dass die Leitungsverbindung keinerlei negativen Einfluss auf die Dosierflüssigkeit oder das zur Aspiration oder Dispensation der Dosierflüssigkeit verwendete Arbeitsgas haben kann.

Gerade bei Verwendung der oben bezeichneten flexiblen Leitungsplatinen können selbst Spalträume mit geringen radialen Spaltmaßen zur Aufnahme der Leitungsverbindung genutzt werden.

Wie bereits oben dargelegt wurde, steht dann, wenn die Pipettenspitze an die Pipettiervorrichtung ordnungsgemäß angekoppelt ist, bevorzugt der Kopplungshülsenbereich als der oben genannte Bauteilabschnitt in Anlageeingriff mit der wenigstens einen Schwingungsanregungseinrichtung oder/und dem wenigstens einen Schwingungssensor. Damit ist sichergestellt, dass ein Anlageeingriff zwischen Pipettenspitze und dem Bauteil mit schwingungstechnischem Bezug am Kopplungsstutzen sicher und einfach hergestellt werden kann.

Vorzugsweise erstreckt sich die Pipettenspitze längs einer Pipettenspitzenlängsachse, die im an den Kopplungsstutzen angekoppelten Zustand der Pipettenspitze mit der Einführachse der Pipettiervorrichtung vorzugsweise zusammenfällt. Gemäß einer vorteilhaften Weiterbildung der vorliegenden Erfindung steht ein zur Einführachse und zur Pipettenspitzenlängsachse hinweisender Innenflächenbereich des Kopplungshülsenbereichs in Anlageeingriff mit der Radialkontaktfläche oder/und der Konuskontaktfläche der Schwingungsanregungseinrichtung oder/und des Schwingungssensors. Dabei gilt der Innenflächenbereich dann als zu einer Achse hinweisend, wenn ein Normalenvektor des Innenflächenbereichs eine Komponente aufweist, welche orthogonal zur Achse verläuft und zur Achse hin gerichtet ist. Dabei reicht es aus, wenn ein Teil der Normalenvektoren des Innenflächenbereichs derartige zur jeweiligen Achse hin gerichtete orthogonale Komponenten aufweist, d. h. es soll nicht ausgeschlossen sein, dass der Innenflächenbereich Abschnitte aufweist, welche nicht unmittelbar zur jeweiligen Achse hinweisen, etwa in Form von Nuten.

Weiter weist die Pipettenspitze vorzugsweise einen Radialvorsprung auf, welcher auch dazu genutzt werden kann, im Zusammenwirken mit einem Axialvorsprung (Axialanschlagfläche) am Kopplungsstutzen die Axialposition der Pipettenspitze am Kopplungsstutzen festzulegen, wie dies oben im Zusammenhang mit der Axialanschlagfläche und der Axialgegenanschlagfläche beschrieben wurde. Wie bereits oben dargelegt wurde, steht vorzugsweise ein durch den Radialvorsprung des Kopplungshülsenbereichs ohnehin vorhandener, in axiale Richtung weisender Flächenabschnitt in Anlageeingriff mit der oben bezeichneten Axialkontaktfläche der Schwingungsanregungseinrichtung oder/und des Schwingungssensors. Hierdurch wird der Aufbau der Pipettenspitze vereinfacht, da es nicht erforderlich ist, zusätzliche Axialgegenkontaktflächen an der Pipettenspitze vorzusehen.

Wiederum gilt, dass ein Flächenabschnitt eines Radialvorsprungs des Kopplungshülsenbereichs der Pipettenspitze dann als in axiale Richtung weisend anzusehen ist, wenn ein Normalenvektor dieses Flächenabschnitts parallel zur Pipettenspitzenlängsachse verläuft.

Um eine möglichst gute Ankopplung der Pipettenspitze an die Bauteile mit schwingungstechnischem Bezug gewährleisten zu können, kann vorgesehen sein, dass das Verformungselement in der Kopplungsstellung des Kopplungsstutzens, also in seinem stärker verformten Zustand, eine entgegen der Einführrichtung auf die Pipettenspitze wirkende Spannkraft ausübt, die zu der vom Kopplungsstutzen auf den Kopplungshülsenbereich ausgeübten Haltekraft beiträgt, wobei hierzu vorzugsweise die Pipettenspitze im Kopplungshülsenbereich eine Ausnehmung aufweist, in welche das Verformungselement in der Kopplungsstellung des Kopplungsstutzens eingreift. Eine derartige Wirkungsweise des Verformungselements ist grundsätzlich bereits aus der WO 00/62933 A bekannt.

Besonders Axialkontaktflächen und Konuskontaktflächen der Bauteile mit schwingungstechnischem Bezug an dem Kopplungsstutzen können somit vorteilhaft an entsprechende Gegenkontaktflächen der Pipettenspitze, insbesondere von deren Kopplungshülsenbereich, angekoppelt werden, da die, wie oben beschrieben, erhöhte Haltekraft für eine gute Kraft- und Bewegungsübertragung zwischen der wenigstens einen Kontaktfläche des Bauteils mit schwingungstechnischem Bezug und der Pipettenspitze sorgt.

Besonders bevorzugt ist die hier beschriebene Pipettiervorrichtung eine Pipettiervorrichtung mit mehreren, vorzugsweise rasterartig angeordneten Pipettierkanälen und Kopplungsstutzen.

Die vorliegende Erfindung wird nachfolgend anhand der beiliegenden Zeichnungen näher erläutert. Es stellt dar:
- Figur 1: eine Längsschnittansicht durch einen kopplungsstutzennahen Bereich einer ersten Ausführungsform einer erfindungsgemäßen Pipettiervorrichtung mit auf den Kopplungsstutzen aufgesteckter Pipettenspitze,
- Figur 2: eine Längsschnittansicht durch einen kopplungsstutzennahen Bereich einer zweiten Ausführungsform einer erfindungsgemäßen Pipettiervorrichtung mit auf den Kopplungsstutzen aufgesteckter Pipettenspitze und
- Figur 3: eine Längsschnittansicht durch einen kopplungsstutzennahen Bereich einer dritten Ausführungsform einer erfindungsgemäßen Pipettiervorrichtung mit auf den Kopplungsstutzen aufgesteckter Pipettenspitze.

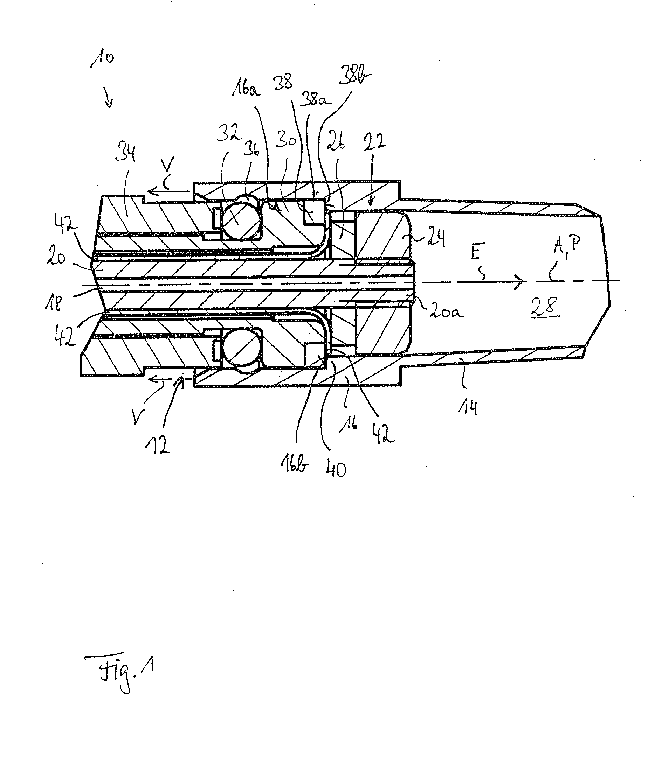

In Figur 1 ist eine erste Ausführungsform einer erfindungsgemäßen Pipettiervorrichtung allgemein mit 10 bezeichnet. Ein Kopplungsstutzen 12 ist derart in einer Einführrichtung E längs einer Einführachse A in eine Pipettenspitze 14 eingeführt, dass ein Kopplungshülsenbereich 16 der Pipettenspitze 14 den Kopplungsstutzen 12 bezogen auf die Einführachse A radial außen umgibt.

Die Pipettiervorrichtung 10 weist einen Pipettierkanal 18 auf, welcher vorzugsweise derart zentral gelegen ist, dass er von der Einführachse durchsetzt ist.

Vorzugsweise ist der dem Kopplungsstutzen 12 nahe Endbereich der Pipettiervorrichtung 10 bezogen auf die Einführachse im Wesentlichen rotationssymmetrisch ausgebildet.

Der Pipettierkanal 18 kann in einem Kanal- oder Pipettierrohr 20 ausgebildet sein, an dessen kopplungsseitigem Längsende 20a eine Einführanordnung 22 vorgesehen sein kann.

Die Einführanordnung kann in dem in Figur 1 gezeigten Beispiel an ihrem freien Längsendbereich 20a einen Klemmring 24 und einen diesem axial unmittelbar benachbarten und an diesen anliegenden Quetschring 26 aufweisen. Der Quetschring 26 ist vorzugsweise aus einem elastomeren Material, besonders bevorzugt aus Gummi, hergestellt und wird im Verlauf der Ankopplung der Pipettenspitze 16 an den Kopplungsstutzen 12 komprimiert.

Weiter weist die Pipettiervorrichtung 10 im Kopplungsstutzen 12 eine Stoppscheibe 30 auf, welche relativ zum Pipettierrohr 20 und dem vorzugsweise mit diesem fest verbundenen Klemmring 24 längs der Einführachse A beweglich ist. Durch eine Relativbewegung des Pipettierrohrs 20 relativ zur Stoppscheibe 30 entgegen der Einführrichtung E kann dann, wenn der Kopplungsstutzen 12, welcher in Figur 1 in seiner Freigabestellung gezeigt ist, in seine Kopplungsstellung bewegt wird, der Quetschring 26 zwischen Klemmring 24 und Stoppscheibe 30 axial komprimiert und dadurch ein elektrischer Kontakt zwischen weiter unten beschriebenen Leitungsanordnungen 42 und daran angeschlossenen Piezoaktoren/sensoren 38 verbessert, bzw. gewährleistet werden.

Die Stoppscheibe 30 muss nicht relativ zum Pipettierrohr 20 und damit zum Klemmring 24 verlagerbar sein, jedoch ist ihre Relativverlagerbarkeit aus den oben genannten Gründen vorteilhaft.

Axial der Stoppscheibe 30 unmittelbar benachbart ist ein die Stoppscheibe 30 und damit auch das Pipettierrohr 20 vorzugsweise vollständig umgebender Elastomerring 32 als ein Verformungselement, welches durch Relativbewegung eines Quetschteils 34 relativ zur Stoppscheibe 30 bzw. auch zur Einführanordnung 22 zwischen der in Figur 1 gezeigten Entlastungsstellung und einer Quetschstellung verformbar ist. Das Quetschteil 34 ist hierzu relativ zur Stoppscheibe 30 und relativ zur Einführanordnung 22 längs der Einführachse A verlagerbar.

Wird der Abstand zwischen Quetschteil 34 und Stoppscheibe 30 verkleinert, so wird das Verformungselement 32 elastisch axial komprimiert, wodurch es nach radial außen verformt wird und in eine nutförmige Ausnehmung 36 an der Innenfläche des Kopplungshülsenbereichs 16 eingreift. Dann wird die Pipettenspitze 14 mittels des verformten Verformungsteils 32 form- und reibschlüssig am Kopplungsstutzen 12 gehalten.

Mit dem Quetschen des Verformungsteils 32 zwischen Quetschteil 34 einerseits und Stoppscheibe 30 andererseits kann der Kopplungsstutzen 12 als in der Kopplungsstellung befindlich angesehen werden. Auf die Quetschung des Quetschrings 26 kommt es zur Ankopplung der Pipettenspitze 14 an den Kopplungsstutzen 12 nicht wesentlich an, da dieser zwar einen Reibschluss zusätzlich zu jenem des Verformungselements 32 erzeugt, jedoch die Haltekraft, welche die Pipettenspitze 14 am Kopplungsstutzen 12 hält, maßgeblich von dem durch Formschlusseingriff in die nutförmige Ausnehmung 36 unterstützten Reibschluss zwischen Verformungselement 32 und Innenfläche des Kopplungshülsenbereichs 16 bestimmt ist. Der Quetschring 26 dient, wie oben bereits beschrieben, im Wesentlichen der Sicherstellung einer elektrischen Verbindung zwischen Piezoaktoren/sensoren 38 und Leitungsanordnungen 42, welche beide unten ausführlich beschrieben sind.

In der Stoppscheibe 30 sind an dem zur Pipettenspitze 14 hinweisenden Längsende vorzugsweise radial außen gelegene Piezoaktoren/sensoren 38 vorgesehen, welche über den Umfang der Stoppscheibe verteilt, vorzugsweise gleichmäßig verteilt, angeordnet sind. Jeder Piezoaktor/sensor 38 weist eine in radialer Richtung freiliegende Radialkontaktfläche 38a auf und weist eine in axiale Richtung weisende Axialkontaktfläche 38b auf.

Die Radialkontaktfläche 38a des Piezoaktors/sensors 38 steht in Anlageeingriff mit einem zur Einführachse A und zur Pipettenspitzelängsachse P hinweisenden Innenflächenbereich 16a des Kopplungshülsenbereichs 16 der Pipettenspitze. Weiter steht die Axialkontaktfläche 38b in Anlageeingriff mit einer Axialgegenkontaktfläche 16b eines Radialvorsprungs 40 der Pipettenspitze 14, welcher gleichzeitig als Axialpositionierungsmittel der Pipettenspitze 14 dient.

Der Elastomerring 32 als das Verformungselement des Kopplungsstutzens 12 und die nutförmige Ausnehmung 36 am Innenflächenbereich 16a sind in der Entlastungsstellung des Verformungselements 32 bzw. der Freigabestellung des Kopplungsstutzens 12 derart geometrisch zueinander ausgerichtet, dass das Verformungselement 32 in der Quetschstellung derart in die nutförmige Ausnehmung 36 einragt und an Flächenbereichen derselben anliegt, dass das Verformungselement 32 auf die Pipettenspitze 14 eine entgegen der Einführrichtung E wirkende Vorspannkraft V ausübt, die zur Haltekraft beiträgt, die die Pipettenspitze 14 insgesamt am Kopplungsstutzen 12 hält.

Durch diese Vorspannkraft V wird der Anlagekontakt des Anlageeingriffs zwischen Axialkontaktfläche 38b und Axialgegenkontaktfläche 16b der Pipettenspitze 14 verbessert, so dass eine ausreichend gute mechanische Kopplung zwischen den Piezoaktoren/sensoren 38 und der Pipettenspitze 14 erhalten werden kann.

Die Piezoaktoren/sensoren 38 sind über Leitungsanordnungen 42 mit einer in Figur 1 nicht gezeigten Steuereinrichtung verbunden, von welcher sie über die Leitungsanordnungen 42 mit Energie versorgt werden. Gegebenenfalls können über die Leitungsanordnungen 42 zusätzlich oder alternativ Informationssignale zwischen den einzelnen Piezoaktoren/sensoren 38 und der nicht dargestellten Steuereinrichtung übertragen werden.

Zur Bereitstellung einer möglichst guten Beweglichkeit der Piezoaktoren/sensoren 38 sind diese vorzugsweise gesondert von den Leitungsanordnungen 42 ausgebildet. Der Quetschring 26 kann dann, wie zuvor beschrieben, für einen sicheren Anlagekontakt zwischen Piezoaktoren/sensoren 38 und Leitungsanordnungen 42 sorgen.

Dadurch kann beispielsweise jeder Piezoaktor/sensor 38 zu einer definierten Schwingung angeregt werden, die dieser durch den Anlageeingriff seiner Kontaktflächen 38a und 38b auf die Pipettenspitze 14 überträgt. Außerdem kann mit Hilfe der Piezoaktoren/sensoren 38 eine Schwingungsform der Pipettenspitze 14 erfasst werden. Aus dem Verhältnis von anregender Schwingungsform und erfasster angeregter Schwingungsform kann die in Figur 1 nicht dargestellte Steuereinheit Rückschlüsse über eine Eintauchtiefe der Pipettenspitze 14 in Dosierflüssigkeit oder/und über eine Menge an im Aufnahmevolumen 28 aufgenommener Dosierflüssigkeit ziehen.

Die Leitungsanordnungen 42 können beliebig ausgebildet sein, etwa als dünne isolierte Drähte, sind jedoch bevorzugt als gedruckte Leiterbahnen auf einem flexiblen Leiterbahnsubstrat ausgebildet, da diese Art von Leitungsanordnungen in Radialspalten mit besonders geringen radialen Abmessungen untergebracht werden können.

Wie in Figur 1 dargestellt ist, ist die Leitungsanordnung 42 vorteilhafterweise bauraumsparend radial zwischen dem Pipettierrohr 20 und der Quetscheinrichtung 34, insbesondere zwischen dem Pipettierrohr 20 und der Stoppscheibe 30 von den einzelnen Piezoaktoren/sensoren 28 zu der axial entfernt gelegenen, nicht dargestellten Steuereinrichtung geführt.

Wie in Figur 1 zu erkennen ist, entspricht die radiale Abmessung des dort gezeigten Kopplungsstutzens im Wesentlichen der radialen Abmessung des aus der WO 00/62933 A bekannten Kopplungsstutzens, obgleich letzterer nicht mit einer Schwingungsanregungseinrichtung und einem Schwingungssensor, hier in Form von Piezoaktoren/sensoren 38, versehen ist.

Durch die Anordnung der Schwingungsanregungseinrichtungen 38 und der Schwingungssensoren 38 radial innerhalb des Kopplungshülsenbereichs 16 der Pipettenspitze 14 wird also für das Vorsehen dieser Bauteile mit schwingungstechnischem Bezug kein weiterer Bauraum benötigt. Sofern die Pipettiervorrichtung 10 mehrere Pipettierkanäle 18 aufweist, denen jeweils ein Kopplungsstutzen 12 zugeordnet ist, kann der Abstand orthogonal zur Einführachse A zwischen den einzelnen Kopplungsstutzen 12 im Vergleich zu dem Stand der Technik unverändert beibehalten werden. Damit sind die mit der Pipettiervorrichtung 10 üblicherweise zusammenwirkenden Laborgeräte wie Titerplatten und dergleichen ohne Weiteres weiter verwendbar.

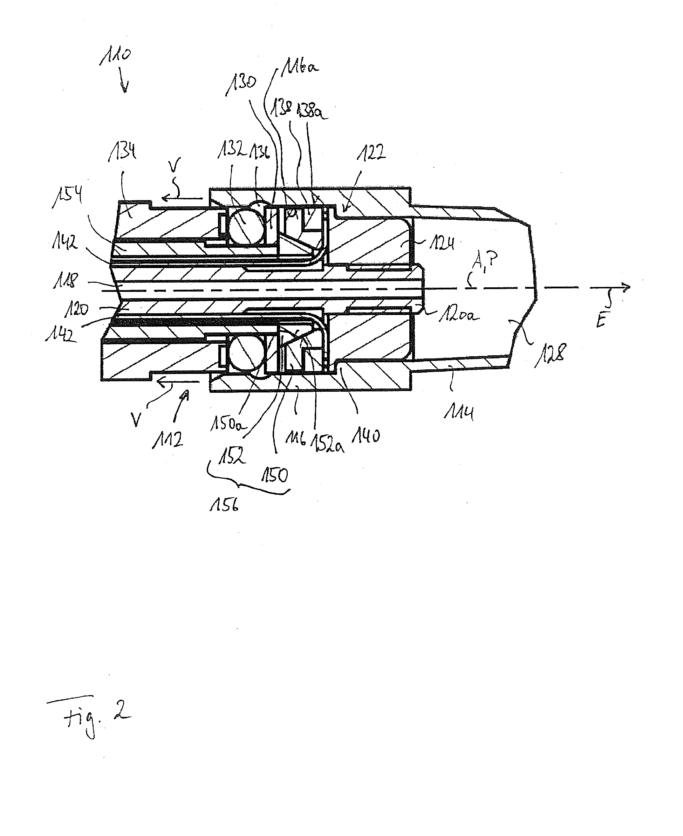

In Figur 2 ist eine alternative zweite Ausführungsform im Längsschnitt dargestellt. Die in Figur 2 gezeigte zweite Ausführungsform, bei der gleiche Bauteile und Bauteilabschnitte wie in Figur 1 gleiche Bezugszeichen aufweisen, jedoch erhöht um die Zahl 100, wird nachfolgend nur insofern beschrieben werden, als sie sich von der in Figur 1 gezeigten ersten Ausführungsform unterscheidet, auf deren Beschreibung ansonsten ausdrücklich verwiesen wird.

Die Ausführungsform von Figur 2 weist keinen Quetschring auf wie die Ausführungsform von Figur 1.

Dagegen sind die Piezoaktoren/sensoren 138 auf einen Träger 150 aus elastisch verformbaren Material montiert.

Der Träger 150 wirkt mit einem Umlenkbauteil 152 zusammen, welches eine konische Wirkfläche 152a aufweist, die an einer negativ-konischen Gegenwirkfläche 150a des Trägers 150 anliegt.

Wird beispielsweise das Quetschteil 134 relativ zur Einführanordnung 122 bewegt, so wird die vom Quetschteil 134 auf das Verformungselement 132 ausgeübte Verformungskraft auf die Stoppscheibe 130 übertragen, welche diese Kraft weiter auf das Umlenkbauteil 152 überträgt. Aufgrund der zusammenwirkenden konischen und negativ-konischen Wirkflächen 152a bzw. 150a übt das Umlenkbauteil 152 auf den Träger 150 sowohl eine in axiale Richtung als auch in radiale Richtung wirkende Kraft aus. Die in radiale Richtung wirkende Kraft drückt dabei die Radialkontaktflächen 138a an die Innenflächenbereiche 116a des Kontakthülsenbereichs 116 der Pipettenspitze 114 und sorgt für einen guten Anlageeingriff zwischen den Piezoaktoren/sensoren 138 und der Pipettenspitze 114.

Alternativ zum Quetschteil 134 kann auch ein relativ zum Pipettierrohr 120 und damit zur Einführanordnung 122 längs der Einführachse A verlagerbares Verstellrohr 154 für eine axiale Kraftbeaufschlagung des Umlenkbauteils 152 sorgen.

Das Umlenkbauteil 152 und der Träger 150 bilden somit eine Umlenkeinrichtung 156.

Aufgrund der stufenförmigen Ausbildung des in Figur 2 gezeigten Klemmrings 124 weisen die Piezoaktoren/sensoren 138 in der in Figur 2 gezeigten zweiten Ausführungsform keine Axialkontaktflächen auf. Dies muss jedoch nicht so sein. Die Einführanordnung 122 der zweiten Ausführungsform kann ebenso wie jene der ersten Ausführungsform derart gebildet sein, dass der Radialvorsprung 140 der Pipettenspitze 114 an einer Axialkontaktfläche der Piezoaktoren/sensoren 138 zur Anlage kommt, was eine Schwingungskopplung zwischen den Piezoaktoren/sensoren 138 einerseits und der Pipettenspitze 114 weiter verbessert.

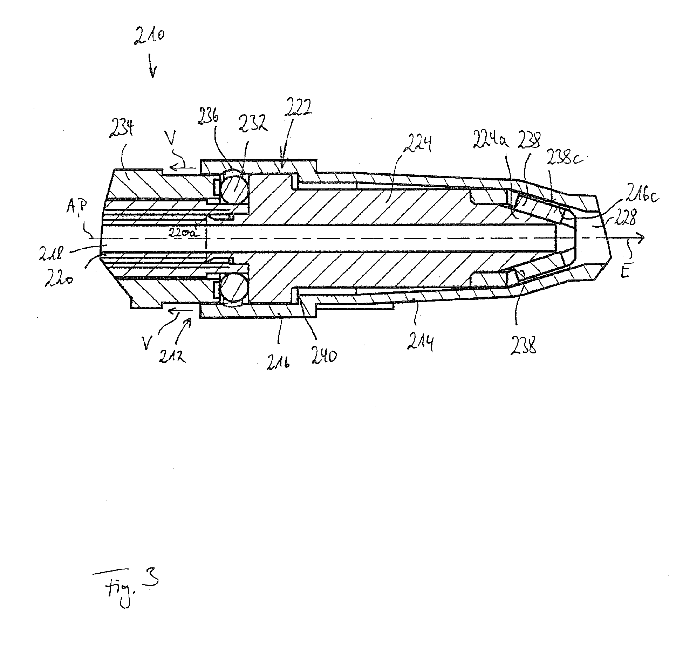

In Figur 3 ist ein Längsschnitt einer alternativen dritten Ausführungsform gezeigt, bei welcher gleiche Bauteile und Bauteilabschnitte wie in der ersten und zweiten Ausführungsform mit gleichen Bezugszeichen versehen sind, jedoch erhöht um die Zahl 200 bzw. 100. Die dritte Ausführungsform wird nachfolgend nur insofern beschrieben werden als sie sich von den ersten beiden Ausführungsformen unterscheidet, auf deren Beschreibung ansonsten ausdrücklich verwiesen wird.

Bei der in Figur 3 gezeigten dritten Ausführungsform ist das Verformungselement 232 unmittelbar zwischen dem Quetschteil 234 und dem Klemmring 224 angeordnet, wobei der Klemmring, verglichen mit den ersten beiden Ausführungsformen, eine in axialer Richtung deutlich längliche Gestalt aufweist.

Wie im Zusammenhang mit Figur 1 bereits beschrieben wurde, kann die Funktion der Stoppscheibe, wie es bei der dritten Ausführungsform tatsächlich der Fall ist, in den Klemmring 224 integriert sein.

In der dritten Ausführungsform sind die Piezoaktoren/sensoren 238 in einem konischen Abschnitt 224a des Klemmrings 224 angeordnet, so dass die Piezoaktoren/sensoren 238 eine sich in Einführrichtung E verjüngende Konuskontaktfläche 238c aufweisen, welche bei angekoppelter Pipettenspitze 214 mit einer negativ-konischen Konusgegenkontaktfläche 216c des Kopplungshülsenbereichs 216 der Pipettenspitze 214 in Anlageeingriff sind. Durch die vom Verformungselement 232 in seiner Quetschstellung im Zusammenwirken mit der nutförmigen Ausnehmung 236 der Pipettenspitze 214 erzeugte Vorspannkraft V wird ein guter Anlagekontakt zwischen der Konuskontaktfläche 238c und der Konusgegenkontaktfläche 216c bereitgestellt und während der Dauer der Ankopplung der Pipettenspitze 214 an den Kopplungsstutzen 212 aufrecht erhalten.

Es wird darauf hingewiesen, dass die Kopplungskontaktfläche 238c auch dann als solche anzusehen ist, wenn mehrere voneinander gesonderte Piezoaktoren/sensoren 238 über den Umfang der freien Spitze des Kopplungsstutzen 212 verteilt angeordnet sind und jeder einzelne Piezoaktor/sensor 238 sich in Umfangsrichtung nur über einen Bruchteil des vollen Umfangs erstreckt.

## Patentansprüche

1. Pipettiervorrichtung (10; 110; 210) mit wenigstens einem Pipettierkanal (18; 118; 218), welcher einen Kopplungsstutzen (12; 112; 212) aufweist, der dazu ausgebildet ist, zur betriebsmäßigen Ankopplung einer Pipettenspitze (14; 114; 214) an den Pipettierkanal (18; 118; 218) längs einer Einführachse (A) in einer Einführrichtung (E) in einen den Kopplungsstutzen (12; 112; 212) im gekoppelten Zustand außen umgebenden Kopplungshülsenbereich (16; 116; 216) der Pipettenspitze (14; 114; 214) eingeführt zu werden,
**dadurch gekennzeichnet, dass** der Kopplungsstutzen (12; 112; 212) in einem Bereich, welcher bei angekoppelter Pipettenspitze (14; 114; 214) radial innerhalb der Pipettenspitze (14; 114; 214) gelegen ist, wenigstens eine Schwingungsanregungseinrichtung (38; 138; 238) aufweist, welche dazu ausgebildet ist, eine Schwingungsform an einem mit ihr in Anlageeingriff stehenden Bauteil (14; 114; 214) oder Bauteilabschnitt (16; 116; 216) anzuregen, und dass der Kopplungsstutzen (12; 112; 212) in einem Bereich, welcher bei angekoppelter Pipettenspitze (14; 114; 214) radial innerhalb der Pipettenspitze (14; 114; 214) gelegen ist, wenigstens einen Schwingungssensor (38; 138; 238) aufweist, welcher dazu ausgebildet ist, eine Schwingungsform eines mit ihm in Anlageeingriff stehenden Bauteils (14; 114; 214) oder Bauteilabschnitts (16; 116; 216) zu erfassen.

2. Pipettiervorrichtung (10; 110; 210) nach Anspruch 1,
**dadurch gekennzeichnet, dass** wenigstens ein Schwingungssensor (38; 138; 238) auch eine Schwingungsanregungseinrichtung (38; 138; 238) ist, vorzugsweise dass der wenigstens eine Schwingungssensor (38; 138; 238) auch die wenigstens eine Schwingungsanregungseinrichtung (38; 138; 238) ist.

3. Pipettiervorrichtung (10; 110) nach Anspruch 1 oder 2,
**dadurch gekennzeichnet, dass** die wenigstens eine Schwingungsanregungseinrichtung (38; 138) oder/und der wenigstens eine Schwingungssensor (38; 138) jeweils mit einer freiliegenden, bezogen auf die Einführachse (A) nach radial außen weisenden Radialkontaktfläche (38a; 138a) am Kopplungsstutzen (12; 112) vorgesehen ist.

4. Pipettiervorrichtung (10) nach einem der vorhergehenden Ansprüche,
**dadurch gekennzeichnet, dass** die wenigstens eine Schwingungsanregungseinrichtung (38) oder/und der wenigstens eine Schwingungssensor (38) jeweils mit einer freiliegenden, in Einführrichtung (E) weisenden Axialkontaktfläche (38b) am Kopplungsstutzen (12) vorgesehen ist.

5. Pipettiervorrichtung (210) nach einem der vorhergehenden Ansprüche,
**dadurch gekennzeichnet, dass** die wenigstens eine Schwingungsanregungseinrichtung (238) oder/und der wenigstens eine Schwingungssensor (238) jeweils mit einer freiliegenden, sich in Einführrichtung (E) verjüngenden Konuskontaktfläche (238c) am Kopplungsstutzen (212) vorgesehen ist.

6. Pipettiervorrichtung (10; 110; 210) nach einem der vorhergehenden Ansprüche,
**dadurch gekennzeichnet, dass** der Kopplungsstutzen (12; 112; 212) verstellbar ist zwischen einer Kopplungsstellung und einer Freigabestellung, wobei die Kopplungsstellung derart zur betriebsmäßigen Ankopplung der Pipettenspitze (14; 114; 214) an den Pipettierkanal (18; 118; 218) ausgebildet ist, dass - bei Betrachtung eines Zustands mit einem in den Kopplungshülsenbereich (16; 116; 216) eingeführten Kopplungsstutzen (12; 112; 212) - die von dem Kopplungsstutzen (12; 112; 212) auf den, bezogen auf die Einführachse (A), ihn radial außen umgebenden Kopplungshülsenbereich (16; 116; 216) ausgeübte Haltekraft (V) in der Kopplungsstellung größer ist als in der Freigabestellung.

7. Pipettiervorrichtung (10; 110; 210) nach Anspruch 6,
**dadurch gekennzeichnet, dass** der Kopplungsstutzen (12; 112; 212) folgende Bauteile oder/und Baugruppen umfasst:
- eine Einführanordnung (22; 122; 222), von welcher ein Längsendabschnitt zur Einführung in die Pipettenspitze (14; 114; 214) ausgebildet ist,
- ein Verformungselement (32; 132; 232), insbesondere Elastomerring (32; 132; 232), besonders bevorzugt O-Ring, welches in der Kopplungsstellung stärker verformt ist als in der Freigabestellung, und
- ein mit dem Verformungselement (32; 132; 232) zu dessen Verformung zusammenwirkendes Quetschteil (34; 134; 234), welches relativ zur Einführanordnung (22; 122; 222) beweglich ist zwischen einer der Kopplungsstellung zugeordneten Quetschstellung, in der das Verformungselement (32; 132; 232) stärker verformt ist, und einer der Freigabestellung zugeordneten Entlastungsstellung, in der das Verformungselement (32; 132; 232) weniger stark verformt ist als in der Quetschstellung, vorzugsweise unverformt ist,
wobei die wenigstens eine Schwingungsanregungseinrichtung (38; 138; 238) und der wenigstens eine Schwingungssensor (38; 138; 238) an der Einführanordnung (22; 122; 222) vorgesehen sind.

8. Pipettiervorrichtung (110) nach Anspruch 7,
**dadurch gekennzeichnet, dass** die wenigstens eine Schwingungsanregungseinrichtung (138) oder/und der wenigstens eine Schwingungssensor (138) an einem bezogen auf die Einführachse (A) in radialer oder/und axialer Richtung verlagerbaren Träger (150) vorgesehen ist, wobei der Träger (150) vorzugsweise durch Bewegung des Quetschteils (134), besonders bevorzugt unter Vermittlung einer Umlenkeinrichtung (156), zur radialen Verlagerung antreibbar ist.

9. Pipettiervorrichtung (110) nach Anspruch 8,
**dadurch gekennzeichnet, dass** zwischen Quetschteil (134) und Träger (150) eine die Bewegung des Quetschteils (134) in eine radiale Verlagerung des Trägers (150) umlenkende Umlenkeinrichtung (156) vorgesehen ist, welche ein erstes Umlenkbauteil (152) mit einer Wirkfläche aus konischer Wirkfläche (152a) und negativ-konischer GegenWirkfläche (150a) aufweist und ein zweites Umlenkbauteil (152) mit der jeweils anderen Wirkfläche aus schräger, insbesondere konischer Wirkfläche (152a) und negativ-schräger, insbesondere negativ-konischer Gegenwirkfläche (150a), wobei die schräge, insbesondere konische Wirkfläche (152a) und negativ-schräge, insbesondere negativ-konische Gegenwirkfläche (150a) zur Bewegungsumlenkung in Gleitanlageeingriff miteinander stehen, und wobei bevorzugt der Träger (150) das zweite Umlenkbauteil (150) ist.

10. Pipettiervorrichtung (10; 110; 210) nach einem der vorhergehenden Ansprüche,
**dadurch gekennzeichnet, dass** die Schwingungsanregungseinrichtung (38; 138; 238) oder/und der Schwingungssensor (38; 138; 238) näher an dem einführseitigen Längsende des Kopplungsstutzens (12; 112; 212) gelegen ist als das Quetschteil (34; 134; 234), vorzugsweise auch als das Verformungselement (32; 132; 232).

11. Pipettiervorrichtung (10; 110; 210) nach einem der vorhergehenden Ansprüche,
**dadurch gekennzeichnet, dass** der Pipettierkanal (18; 118; 218) ein sich längs einer Pipettierkanalachse (P) erstreckendes zentrales Kanalrohr (20; 120; 220) und wenigstens ein dieses radial außen umgebendes weiteres Bauteil aufweist, wie etwa Verformungselement (32; 132; 232) oder/und Quetschteil (34; 134; 234), wobei eine Signal oder/und Energie übertragende Leitungsverbindung (42; 142; 242) zu der wenigstens einen Schwingungsanregungseinrichtung (38; 138; 238) oder/und zu dem wenigstens einen Schwingungssensor (38; 138; 238) längs der Pipettierkanalachse (P) radial außerhalb des Kanalrohrs (20; 120; 220), aber radial innerhalb des weiteren Bauteils geführt ist.

12. Pipettiervorrichtung (10; 110; 210) nach einem der vorhergehenden Ansprüche, an welche eine sich längs einer Pipettenspitzenlängsachse erstreckende Pipettenspitze (14; 114; 214) angekoppelt ist,
**dadurch gekennzeichnet, dass** der Kopplungshülsenbereich (16; 116; 216) als der Bauteilabschnitt in Anlageeingriff mit der Schwingungsanregungseinrichtung (38; 138; 238) oder/und dem Schwingungssensor (38; 138; 238) steht.

13. Pipettiervorrichtung (10; 110; 210) nach Anspruch 12, unter Einbeziehung wenigstens eines der Ansprüche 3 und 5,
**dadurch gekennzeichnet, dass** ein zur Einführachse (A) und zur Pipettenspitzenlängsachse P hinweisender Innenflächenbereich (16a; 116a; 216c) der Pipettenspitze (14) in Anlageeingriff mit der Radialkontaktfläche (38a; 138a; 238a) oder/und der Konuskontaktfläche (238c) der Schwingungsanregungseinrichtung (38; 138; 238) oder/und des Schwingungssensors (38; 138; 238) steht.

14. Pipettiervorrichtung (10) nach Anspruch 12 oder 13, unter Einbeziehung des Anspruchs 4,
**dadurch gekennzeichnet, dass** die Pipettenspitze (14) im Kopplungshülsenbereich (16) einen Radialvorsprung (40) aufweist, von welchem eine in axiale Richtung weisender Flächenabschnitt (16b) in Anlageeingriff mit der Axialkontaktfläche (38b) der Schwingungsanregungseinrichtung (38) oder/und des Schwingungssensors (38) steht.

15. Pipettiervorrichtung (10; 110; 210) nach einem der Ansprüche 12 bis 14,
**dadurch gekennzeichnet, dass** das Verformungselement (32; 132; 232) in der Kopplungsstellung des Kopplungsstutzens (12; 112; 212), also in seinem stärker verformten Zustand, eine entgegen der Einführrichtung (E) auf die Pipettenspitze (14; 114; 214) wirkende Spannkraft (V) ausübt, die zu der vom Kopplungsstutzen (12; 112; 212) auf den Kopplungshülsenbereich (16; 116; 216) ausgeübten Haltekraft (V) beiträgt, wobei hierzu vorzugsweise die Pipettenspitze (14; 114; 214) im Kopplungshülsenbereich (16; 116; 216) eine Ausnehmung (36; 136; 236) aufweist, in welche das Verformungselement (32; 132; 232) in der Kopplungsstellung des Kopplungsstutzens (12; 112; 212) eingreift.

## Claims

1. Pipette device (10; 110; 210) comprising at least one pipette channel (18; 118; 218) which has a coupling piece (12; 112; 212) designed to be inserted along an insertion axis (A) in an insertion direction (E) into a coupling sleeve region (16; 116; 216) of a pipette tip (14; 114; 214) which surrounds the outside of the coupling piece (12; 112; 212) when in the coupled state, in order to couple the pipette tip (14; 114; 214) to the pipette channel (18; 118; 218) for operation,
**characterised in that** a region, which is located radially inside the pipette tip (14; 114; 214) when the pipette tip (14; 114; 214) is coupled, of the coupling piece (12; 112; 212) comprises at least one vibration excitation means (38; 138; 238) which is designed to excite a mode of vibration on a component (14; 114; 214) or component portion (16; 116; 216) which is in abutting engagement with the vibration excitation means, and **in that** a region, which is located radially inside the pipette tip (14; 114; 214) when the pipette tip (14; 114; 214) is coupled, the coupling piece (12; 112; 212) comprises at least one vibration sensor (38; 138; 238) designed to detect a mode of vibration of a component (14; 114; 214) or component portion (16; 116; 216) which is in abutting engagement with the vibration sensor.

2. Pipette device (10; 110; 210) according to claim 1, **characterised in that** at least one vibration sensor (38; 138; 238) is also a vibration excitation means (38; 138; 238), preferably in that the at least one vibration sensor (38; 138; 238) is also the at least one vibration excitation means (38; 138; 238).

3. Pipette device (10; 110) according to either claim 1 or claim 2, **characterised in that** the at least one vibration excitation means (38; 138) and/or the at least one vibration sensor (38; 138) are each provided with an exposed radial contact surface (38a; 138a) on the coupling piece (12; 112) which points radially outwards in relation to the insertion axis (A).

4. Pipette device (10) according to any of the preceding claims, **characterised in that** the at least one vibration excitation means (38) and/or the at least one vibration sensor (38) are each provided with an exposed axial contact surface (38b) on the coupling piece (12) which points in the insertion direction (E).

5. Pipette device (210) according to any of the preceding claims, **characterised in that** the at least one vibration excitation means (238) and/or the at least one vibration sensor (238) are each provided with an exposed tapered contact surface (238c) on the coupling piece (212) which tapers in the insertion direction (E).

6. Pipette device (10; 110; 210) according to any of the preceding claims, **characterised in that** the coupling piece (12; 112; 212) can be moved between a coupling position and a release position, the coupling position being designed to couple the pipette tip (14; 114; 214) to the pipette channel (18; 118; 218) for operation in such a way that, when a state is observed whereby a coupling piece (12; 112; 212) is introduced into the coupling sleeve region (16; 116; 216), the holding force (V) exerted by the coupling piece (12; 112; 212) on the coupling sleeve region (16; 116; 216), which radially surrounds the outside of the coupling piece in relation to the insertion axis (A), is greater in the coupling position than in the release position.

7. Pipette device (10; 110; 210) according to claim 6, **characterised in that** the coupling piece (12; 112; 212) comprises the following components and/or component assemblies:
- an insertion arrangement (22; 122; 222), a longitudinal end portion of which is designed for insertion into the pipette tip (14; 114; 214),
- a deformation element (32; 132; 232), in particular an elastomer ring (32; 132; 232), particularly preferably an O-ring, which is deformed to a greater extent in the coupling position than in the release position, and
- a compression part (34; 134; 234) which interacts with the deformation element (32; 132; 232) in order to deform it and can be moved relative to the insertion arrangement (22; 122; 222) between a compression position which is assigned to the coupling position and in which the deformation element (32; 132; 232) is deformed to a greater extent, and a relief position which is assigned to the release position and in which the deformation element (32; 132; 232) is deformed to a lesser extent than in the compression position, and is preferably not deformed,,
the at least one vibration excitation means (38; 138; 238) and the at least one vibration sensor (38; 138; 238) being provided on the insertion arrangement (22; 122; 222).

8. Pipette device (110) according to claim 7, **characterised in that** the at least one vibration excitation means (138) and/or the at least one vibration sensor (138) is provided on a support (150) which, in relation to the insertion axis (A), can be mounted in the radial and/or axial direction, the support (150) preferably being driven by the movement of the compression part (134), particularly preferably by means of a deflection apparatus (156), in order to move it in the radial direction.

9. Pipette device (110) according to claim 8, **characterised in that** a deflection device (156) is provided between the compression part (134) and the support (150) which deflects the movement of the compression part (134) into a radial movement of the support (150) and comprises both a first deflection component (152) having an active surface made up of a tapered active surface (152a) and a negatively tapered mating active surface (150a), and a second deflection component (152) having the respective other active surface made up of an oblique, in particular tapered, active surface (152a) and a negatively oblique, in particular negatively tapered, mating active surface (150a), the oblique, in particular tapered, active surface (152a) and the negatively oblique, in particular negatively tapered, mating active surface (150a) being in sliding abutting engagement with one another for the purpose of movement deflection, and the support (150) preferably being the second deflection component (150).

10. Pipette device (10; 110; 210) according to any of the preceding claims, **characterised in that** the vibration excitation means (38; 138; 238) and/or the vibration sensor (38; 138; 238) is positioned closer to the insertion-side longitudinal end of the coupling piece (12; 112; 212) than the compression part (34; 134; 234), preferably also than the deformation element (32; 132; 232).

11. Pipette device (10; 110; 210) according to any of the preceding claims, **characterised in that** the pipette channel (18; 118; 218) comprises a central channel duct (20; 120; 220) which extends along a pipette channel axis (P), and at least one additional component which radially surrounds the outside of said channel duct, such as a deformation element (32; 132; 232) and/or a compression part (34; 134; 234), a connecting line (42; 142; 242) which transmits a signal and/or energy being guided along the pipette channel axis (P), radially outside the channel duct (20; 120; 220) yet radially inside the additional component, to the at least one vibration excitation means (38; 138; 238) and/or to the at least one vibration sensor (38; 138; 238).

12. Pipette device (10; 110; 210) according to any of the preceding claims, to which a pipette tip (14; 114; 214), which extends along a pipette tip longitudinal axis, is coupled, **characterised in that** the coupling sleeve region (16; 116; 216) as the component portion is in abutting engagement with the vibration excitation means (38; 138; 238) and/or the vibration sensor (38; 138; 238).

13. Pipette device (10; 110; 210) according to claim 12, including at least one of claims 3 and 5, **characterised in that** an inner surface region (16a; 116a; 216c) of the pipette tip (14) which points towards the insertion axis (A) and towards the pipette tip longitudinal axis P is in abutting engagement with the radial contact surface (38a; 138a; 238a) and/or the tapered contact surface (238c) of the vibration excitation means (38; 138; 238) and/or of the vibration sensor (38; 138; 238).

14. Pipette device (10) according to either claim 12 or claim 13, including claim 4, **characterised in that** the pipette tip (14) has a radial projection (40) in the coupling sleeve region (16), a surface portion (16b) of which points in the axial direction and is in abutting engagement with the axial contact surface (38b) of the vibration excitation means (38) and/or of the vibration sensor (38).

15. Pipette device (10; 110; 210) according to any of claims 12 to 14, **characterised in that**, when the coupling piece (12; 112; 212) is in the coupling position, i.e. when it is deformed to a greater extent, the deformation element (32; 132; 232) exerts a tensioning force (V) on the pipette tip (14; 114; 214) counter to the insertion direction (E), which force contributes to the holding force (V) exerted by the coupling piece (12; 112; 212) on the coupling sleeve region (16; 116; 216), the pipette tip (14; 114; 214) preferably comprising a recess (36; 136; 236) in the coupling sleeve region (16; 116; 216) for this purpose, in which recess the deformation element (32; 132; 232) engages when the coupling piece (12; 112; 212) is in the coupling position.

## Revendications

1. Dispositif de pipetage (10; 110; 210) avec au moins un canal de pipetage (18; 118; 218), lequel présente une pièce de couplage (12; 112; 212) qui est conçue pour le couplage en fonctionnement d'un embout de pipette (14; 114; 214) au canal de pipetage (18; 118; 218) le long d'un axe d'introduction (A) dans un dispositif d'introduction (E) dans une zone de douille de couplage (16; 116; 216) de l'embout de pipette (14; 114; 214) entourant extérieurement la pièce de couplage (12; 112; 212) à l'état couplé,
**caractérisé en ce que** la pièce de couplage (12; 112; 212) présente au moins un dispositif d'excitation de vibrations (38; 138; 238) dans une zone qui est située radialement à l'intérieur de l'embout de pipette (14; 114; 214) lorsque l'embout de pipette (14; 114; 214) est accouplé, lequel est conçu pour générer un mode de vibration sur un élément de construction (14; 114; 214) ou une section d'élément de construction (16; 116; 216) se trouvant en prise avec lui et **en ce que** la pièce de couplage (12; 112; 212) présente au moins un capteur de vibrations (38; 138; 238) dans une zone qui est située radialement à l'intérieur de l'embout de pipette (14; 114; 214) lorsque l'embout de pipette (14; 114; 214) est accouplé, lequel est conçu pour détecter un mode de vibration d'un élément de construction (14; 114; 214) ou d'une section d'élément de construction (16; 116; 216) se trouvant en prise avec lui.

2. Dispositif de pipetage (10; 110; 210) suivant la revendication 1,
**caractérisé en ce qu'**au moins un capteur de vibrations (38; 138; 238) est également un dispositif d'excitation de vibrations (38; 138; 238), de préférence **en ce que** l'au moins un capteur de vibrations (38; 138; 238) est également l'au moins un dispositif d'excitation de vibrations (38; 138; 238).

3. Dispositif de pipetage (10; 110) suivant la revendication 1 ou 2,
**caractérisé en ce que** l'au moins un dispositif d'excitation de vibrations (38; 138) ou/et l'au moins un capteur de vibrations (38; 138) sont chacun prévus à la pièce de couplage (12; 112) avec une surface de contact radiale (38a; 138a) libre, orientée radialement vers l'extérieur par rapport à l'axe d'introduction (A).

4. Dispositif de pipetage (10) suivant l'une des revendications précédentes, **caractérisé en ce que** l'au moins un dispositif d'excitation de vibrations (38) ou/et l'au moins un capteur de vibrations (38) sont chacun prévus à la pièce de couplage (12) avec une surface de contact axiale (38b) libre, orientée dans la direction d'introduction (E).

5. Dispositif de pipetage (210) suivant l'une des revendications précédentes, **caractérisé en ce que** l'au moins un dispositif d'excitation de vibrations (238) ou/et l'au moins un capteur de vibrations (238) sont chacun prévus à la pièce de couplage (212) avec une surface de contact conique (238c) libre, se rétrécissant dans la direction d'introduction (E).

6. Dispositif de pipetage (10; 110; 210) suivant l'une des revendications précédentes,
**caractérisé en ce que** la pièce de couplage (12; 112; 212) est réglable entre une position de couplage et une position de libération, la position de couplage étant formée de telle façon pour le couplage en fonctionnement de l'embout de pipette (14; 114; 214) au canal de pipetage (18; 118; 218) que - lorsqu'on observe un état avec une pièce de couplage (12; 112; 212) introduite dans la zone de douille de couplage (16; 116; 216) - la force de retenue (V) exercée par la pièce de couplage (12; 112; 212) sur la zone de douille de couplage (16; 116; 216) l'entourant radialement à l'extérieur par rapport à l'axe d'introduction (A), est plus grande dans la position de couplage que dans la position de libération.

7. Dispositif de pipetage (10; 110; 210) suivant la revendication 6,
**caractérisé en ce que** la pièce de couplage (12; 112; 212) comprend les éléments de construction ou/et groupes de construction suivants:
un dispositif d'introduction (22; 122; 222) dont une section longitudinale est formée pour l'introduction dans l'embout de pipette (14; 114; 214),
un élément déformable (32; 132; 232), en particulier une bague en élastomère (32; 132; 232), de manière particulièrement préférée un joint torique, qui se déforme plus fortement dans la position de couplage que dans la position de libération, et
une pièce d'écrasement (34; 134; 234) coopérant avec l'élément déformable (32; 132; 232) pour sa déformation, laquelle est mobile relativement au dispositif d'introduction (22; 122; 222) entre une position d'écrasement affectée à la position de couplage, dans laquelle l'élément déformable (32; 132; 232) est plus fortement déformé, et une position de délestage affectée à la position de libération, dans laquelle l'élément déformable (32; 132; 232) est moins fortement déformé que dans la position d'écrasement, de préférence est non déformé,
l'au moins un dispositif d'excitation de vibrations (38; 138; 238) et l'au moins un capteur de vibrations (38; 138; 238) étant prévus sur le dispositif d'introduction (22; 122; 222).

8. Dispositif de pipetage (110) suivant la revendication 7,
**caractérisé en ce que** l'au moins un dispositif d'excitation de vibrations (138) ou/et l'au moins un capteur de vibrations (138) sont prévus sur un support (150) déplaçable en direction radiale ou/et axiale par rapport à l'axe d'introduction (A), le support (150) pouvant de préférence être entraîné pour le déplacement radial par le mouvement de la pièce d'écrasement (134), de manière particulièrement préférée par l'entremise d'un dispositif de renvoi (156).

9. Dispositif de pipetage (110) suivant la revendication 8,
**caractérisé en ce qu'**un dispositif de renvoi (156) déviant le mouvement de la pièce d'écrasement (134) en un déplacement radial du support (150) est prévu entre la pièce d'écrasement (134) et le support (150), lequel présente un premier élément de renvoi (152) avec une surface active constituée d'une surface active conique (152a) et d'une surface active antagoniste à conicité négative (150a) et un deuxième élément de renvoi (152) avec l'autre surface active respective constituée d'une surface active inclinée, en particulier conique (152a), et d'une surface active antagoniste à inclinaison négative (150a), en particulier à conicité négative, la surface active inclinée, en particulier conique (152a), et la surface active antagoniste à inclinaison négative, en particulier à conicité négative (150a), se trouvant en prise de glissement pour le renvoi du mouvement, et le support (150) étant de préférence le deuxième élément de renvoi (150).

10. Dispositif de pipetage (10; 110; 210) suivant l'une des revendications précédentes,
**caractérisé en ce que** le dispositif d'excitation de vibrations (38; 138; 238) ou/et le capteur de vibrations (38; 138; 238) sont situés plus près de l'extrémité longitudinale côté introduction de la pièce de couplage (12; 112; 212) que la pièce d'écrasement (34; 134; 234), de préférence également que l'élément déformable (32; 132; 232).

11. Dispositif de pipetage (10; 110; 210) suivant l'une des revendications précédentes,
**caractérisé en ce que** le canal de pipetage (18; 118; 218) présente un tube de canal central (20; 120; 220) s'étendant le long d'un axe de canal de pipetage (P) et au moins un autre élément de construction entourant radialement extérieurement celui-ci, tel que par exemple l'élément déformable (32; 132; 232) ou/et la pièce d'écrasement (34; 134; 234), une connexion de ligne électrique (42; 142; 242) transmettant un signal ou/et de l'énergie vers l'au moins un dispositif d'excitation de vibrations (38; 138; 238) ou/et vers l'au moins un capteur de vibrations (38; 138; 238) est guidé le long de l'axe de canal de pipetage (P) radialement à l'extérieur du tube de canal (20; 120; 220), mais radialement à l'intérieur de l'autre élément de construction.

12. Dispositif de pipetage (10; 110; 210) suivant l'une des revendications précédentes, auquel est couplé un embout de pipette (14; 114; 214) s'étendant le long d'un axe longitudinal d'embout de pipette, **caractérisé en ce que** la zone de douille de couplage (16; 116; 216) est en tant qu'élément de construction en prise avec le dispositif d'excitation de vibrations (38; 138; 238) ou/et le capteur de vibrations (38; 138; 238).

13. Dispositif de pipetage (10; 110; 210) suivant la revendication 12, avec prise en compte d'au moins une des revendications 3 ou 5,
**caractérisé en ce qu'**une zone de surface intérieure (16a; 116a; 216c) de l'embout de pipette (14) orientée vers l'axe d'introduction (A) et l'axe longitudinal d'embout de pipette P est en prise avec la surface de contact radiale (38a; 138a; 238a) ou/et la surface de contact conique (238c) du dispositif d'excitation de vibrations (38; 138; 238) ou/et du capteur de vibrations (38; 138; 238).

14. Dispositif de pipetage (10) suivant la revendication 12 ou 13, avec prise en compte de la revendication 4,
**caractérisé en ce que** l'embout de pipette (14) présente dans la zone de douille de couplage (16) une saillie radiale (40) dont une section de surface orientée en direction axiale (16b) est en prise avec la surface de contact axiale (38b) du dispositif d'excitation de vibrations (38) ou/et du capteur de vibrations (38).

15. Dispositif de pipetage (10; 110; 210) suivant l'une des revendications 12 à 14,
**caractérisé en ce que** l'élément déformable (32; 132; 232) exerce dans la position de couplage de la pièce de couplage (12; 112; 212), à savoir dans son état plus fortement déformé, une force de serrage (V) agissant sur l'embout de pipette (14; 114; 214) opposée à la direction d'introduction (E) qui contribue à la force de retenue (V) exercée par la pièce de couplage (12; 112; 212) sur la zone de douille de couplage (16; 116; 216), l'embout de pipette (14; 114; 214) présentant à cet effet de préférence dans la zone de douille de couplage (16; 116; 216) un renfoncement (36; 136; 236) dans lequel l'élément déformable (32; 132; 232) fait prise dans la position de couplage de la pièce de couplage (12; 112; 212).
